# EUROPEAN PATENT SPECIFICATION

(11) **EP 0 798 967 B1**
(45) Date of publication and mention of the grant of the patent: **10.02.1999**
(21) Application number: 95941000.2
(22) Date of filing: 21.11.1995
(51) Int. Cl.: A23G 9/20, A23G 3/02, A23G 9/28

(54) **DISPENSING REPRODUCIBLE AMOUNTS OF AERATED COMPOSITIONS**
ABGABEVORRICHTUNG FÜR REPRODUZIERBARE MENGEN VON BELÜFTETEN ZUSAMMENSETZUNGEN
DISTRIBUTION DE QUANTITES REPRODUCTIBLES DE COMPOSITIONS AEREES

(30) Priority: 23.12.1994 EP 94309769
(43) Date of publication of application: 08.10.1997
(73) Proprietor: UNILEVER PLC, London EC4P 4BQ (GB); UNILEVER N.V., 3013 AL Rotterdam (NL)
(72) Inventor: BIGGS, Donald, Reginald, Bedford MK44 1LR (GB); BINLEY, Gary, Norman, Northampton NN15 6SD (GB); SAWANT, Vijay, Arjun, Wellingborough Northampton NN9 6PE (GB); WARD, Anthony, Bernard, Northampton NN10 9LB (GB)
(74) Representative: Kirsch, Susan Edith
(86) International application number: EP9504607
(87) International publication number: WO9619924

(56) References cited:
- EP-A- 0 521 575
- FR-A- 1 453 685
- FR-A- 2 158 556
- GB-A- 2 181 068
- US-A- 3 179 383
- US-A- 5 349 825
- PATENT ABSTRACTS OF JAPAN vol. 13, no. 130 (M-808), 30 March 1989 & JP,A,63 297789 (N. TSUNENORI ET AL.), 5 December 1988,

## Description

### FIELD OF THE INVENTION

This invention relates to the handling of confectionery and, in particular, to handling of aerated compositions to provide reproducible volumes of these compositions on a continuous basis.

### BACKGROUND OF THE INVENTION

Dispensing of reproducible volumes of aerated material presents difficulties because such material can be expected to distort in shape and undergo changes in volume during handling. These problems result from the aeration, in the form of bubbles, being capable of changing volume when subjected to small, even localised, pressure changes. This problem is particularly found with frozen ice confections because these compositions are aerated and comprise a complex structure containing fats, or fat replacers, and water in addition to milk derived solids. These confections, which include ice cream, ice milks, frozen yoghurts and frozen custards, require careful handling at low temperatures, ie below 0°C, to retain their structure. Aerated chocolate is another example of a material which will change volume under pressure.

Additionally change of pressure and the consequent change in volume will often be associated with variations in viscosity. Therefore an aerated material will show different flow rates when subjected to pressure. The speed of operation of production lines requires rapid and accurate dosing of confectionery materials.

WO 94/19963 (Unilever) discloses a method of dispensing reproducible amounts of an aerated deformable composition eg. ice cream, by introducing a portion of the aerated composition under pressure into a volume and then dispensing the portion from the volume after bringing the volume to ambient. This process utilise a piston pump. The main disadvantages of piston pumps used as decompression fillers are the time taken to complete the decompression step and the need to have a three position valve at the cylinder outlet, ie. load, decompress and delivery positions. This lengthy cycle time is unacceptable for most commercial applications.

### GENERAL DESCRIPTION OF THE INVENTION

Dispensing of aerated confectionery materials is achieved, according to the present invention, by compressing the material under pressure to a predetermined volume in which the bubbles are reduced to a volume which effectively removes errors in measurement.

The invention provides a method of dispensing reproducible amounts of an aerated deformable composition comprising the steps of: i) introducing the composition under pressure into one end of a train of volumes formed in a gear pump, and ii) moving the train of volumes to a dispensing a point.

It is essential that a gear pump is used to dispense reproducible amounts of an aerated deformable composition. Other pumps, such as a peristaltic pump will not deliver amounts of an aerated, deformable composition with the required accuracy.

A gear pump delivers accurate doses by measuring a small fixed volume (represented by the space between the gear teeth) at high pressure at which air is compressed and takes up a relatively small amount of the measured volume. Normally two gears will be used, one driving the other, as this gives more or less pulse free flow. The pressure is dissipated as the measured volume progresses from high to low pressure (low pressure will be equivalent to atmosphere pressure under normal conditions). Since the measured volume at high pressure is very accurately controlled a repeatable, accurate dose can be delivered.

Moving the train of volumes from an input pressurised region to a dispensing point, which will be at ambient atmospheric pressure under normal conditions, may lead to degradation of the product structure. This follows from the sudden pressure drop at the dispensing point. Thus it is preferable to have leakage paths between the volumes to provide a pressure change between each volume.

When operating on a production line making a series of products, the train of volumes may be interrupted in its movement in order to dispense discrete volumes. In a preferred method the train of volumes is driven by a stepped motor.

The ice confections, to which the method is particularly applicable, will usually have an over-run in the range from 50% to 200%.

The presence of a train of volumes allows consistent volumes of aerated product to be accurately dispensed. Thus the final volume is the sum of a large number of small volumes and the accuracy, ie resolution of the method, is one of the relatively small volumes forming the train. Having a train of smaller volumes will increase the number of leakage paths between the high pressure input and lower pressure dispensing point. A dispensing ratio of 0.7 (volume in train) to 30 (volume dispensed) is satisfactory and a ratio of 1:30 will give acceptable accuracy for some products. However, the ratio is preferably above about 50.

The present invention is particularly valuable when several dosing units feed from a single manifold. Variation in equipment will not affect the volume dosed from each unit because the volume of aerated material in the expandable volume is isolated from the manifold feed. The dosing rate is relatively high and usable on standard production lines because the normal dosing cycle does not require a reciprocating movement. Tailing of a dispensed product is reduced by incorporating a brief reversal of the train of volumes to give a suck back.

A gear pump provides a flexible but accurate control of flow rate because the rotational speed of the pump can be closely controlled to produce the delivery rate profile required. Therefore a gear pump, in combination with a controlled profile bottom up filling movement, can advantageously be used to fill non-uniform shapes and/or non-enclosed shapes (for example a Taco Shell).

A gear pump can also be run in the reverse direction to avoid dripping between doses, thus avoiding the need for a closing valve.

### SPECIFIC DESCRIPTION OF THE INVENTION

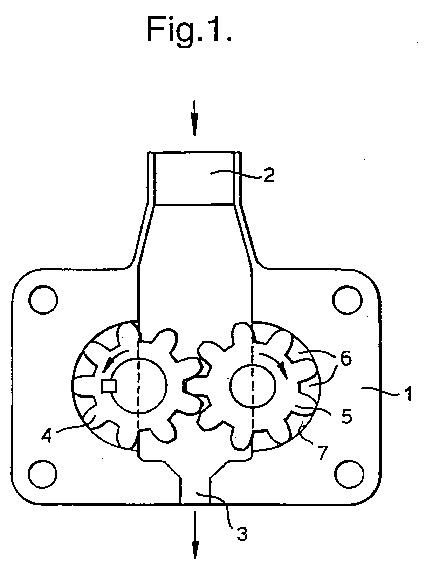

An example of the method of the invention will now be given to illustrate, but not limit the invention, referring to the accompanying diagrammatic drawing in which: Figure 1 shows a section through a device used in the present invention.

A gear pump comprises housing 1 having an input nozzle 2 and an output conduit 3. Toothed gear wheels 4, 5 are journalled within the housing to intermesh. They are driven in contrarotating directions shown by the arrows using standard means which are not shown. The preferred form of drive means is a stepped motor.

In operation an ice cream at -6°C having an overrun of 100% was dispensed from conduit 3 with the wheels rotating as shown. As the teeth moved past cylindrical surfaces 7 in housing 1 a train of volumes 6 was present. Ice cream at a pressure of 6 bar gauge was supplied via nozzle 2 and transported in the volumes 6 in each gear wheel to conduit 3.

In the time period between entering the train of volumes and leaving it the individual volumes of ice cream reduce their pressure to ambient. This reduction occurs because the gap between the teeth and surface 7 allows the excess pressure to leak away.

If the gear wheels were continuously rotated a stream of ice cream at ambient pressure would be supplied from conduit 3. With the use of a stepped motor, or other means of providing an interrupted drive, substantially constant volumes of ice cream are dispensed. In general the accuracy of the system is related to the size of the individual volumes, that is with larger pitch gears the dispensing becomes less accurate. The dispensing rate of the method is easily changed and a 50 strokes, ie dispenses, a minute can be achieved. The interruption of the pump does not have to be sudden and clear acceleration/deceleration periods reduce pump wear. This also allows faster running of the pump.

In the embodiment described the gear wheels had a diameter of 41 mms, a width of 20 mms with the interteeth volume being 0.7 mls. This was used to prepare ice cream (100% overrun) with a volume of 30 mls on a continuous production line.

## Claims

1. A method of dispensing reproducible amounts of an aerated deformable composition comprising the steps of:
i) introducing the composition under pressure into one end of a train of volumes formed in a gear pump, preferably having leakage paths between them, and
ii) moving the train of volumes to a dispensing point.

2. A method according to claim 1 wherein the train of volumes is interrupted in its movement in order to dispense discrete volumes.

3. A method according to any preceding claim wherein the train of volumes is driven by a stepped motor.

4. A method according to any preceding claim wherein the aerated composition is an ice confection having an over-run in the range from 50% to 200%.

5. A method according to any one of the preceding claims wherein the ratio of the volume of each of the volumes of the train of volumes in the gear pump to the said reproducible amount of composition dispersed is above 1:50.

6. A method of dispensing an aerated deformable composition into a non-uniform shape and/or non-enclosed space comprising the steps of:
(i) introducing the composition under pressure into one end of a train of volumes formed in a gear pump, preferably having leakage paths between them, and
(ii) moving the train of volumes to a dispensing point, wherein the dispensing point is combined with a controlled profile bottom up filling movement.

## Patentansprüche

1. Verfahren zur Abgabe reproduzierbarer Mengen einer mit Luft versetzten verformbaren Zusammensetzung, welches die Schritte aufweist:
i) Einbringen der Zusammensetzung unter Druck in ein Ende einer Reihe von Volumina, die in einer Zahnradpumpe gebildet sind, wobei vorzugsweise Entweich-Wege zwischen diesen vorgesehen sind, und
ii) Bewegen der Reihe von Volumina zu einem Abgabepunkt.

2. Verfahren nach Anspruch 1, wobei die Reihe der Volumina in ihrer Bewegung unterbrochen wird, um einzelne Volumina abzugeben.

3. Verfahren nach einem vorhergehenden Ansrpuch, wobei die Reihe der Volumina von einem schrittweise arbeitenden Motor angetrieben wird.

4. Verfahren nach einem vorhergehenden Anspruch, wobei die mit Luft versetzte Zusammensetzung ein Eis-Konfekt mit einem Übermaß im Bereich von 50% bis 200% ist.

5. Verfahren nach einem der vorhergehenden Ansprüche, wobei das Verhältnis des Volumens jedes der Volumina der Reihe von Volumina in der Zahnradpumpe zur reproduzierbaren Menge der abgegebenen Zusammensetzung über 1:50 ist.

6. Verfahren zur Abgabe einer mit Luft versetzten verformbaren Zusammensetzung in eine uneinheitliche Form und/oder einen nicht-umschlossenen Raum, welches die Schritte aufweist:
i) Einbringen der Zusammensetzung unter Druck in ein Ende einer Reihe von Volumina, die in einer Zahnradpumpe gebildet sind, wobei vorzugsweise Entweich-Wege zwischen diesen vorgesehen sind, und
ii) Bewegen der Reihe von Volumina zu einem Abgabepunkt, wobei der Abgabepunkt mit einer gesteuerten Profil-Umkehr-Füllbewegung kombiniert ist.

## Revendications

1. Procédé de distribution de quantités reproductibles d'une composition déformable gazéifiée, comportant les étapes consistant à:
i) introduire la composition sous pression dans la première extrémité d'un train de volumes formés dans une pompe à engrenages, de préférence présentant des chemins de fuite entre les dents des engrenages, et
ii) mouvoir le train de volumes jusqu'à un point de distribution.

2. Procédé selon la revendication 1, dans lequel de train de volumes est interrompu dans son mouvement pour distribuer des volumes discrets.

3. Procédé selon l'une quelconque des revendications précédentes, dans lequel le train de volumes est entraîné par un moteur pas à pas.

4. Procédé selon l'une quelconque des revendications précédentes, dans lequel la composition gazéifiée est une friandise de glace présentant un gonflement par incorporation de gaz, allant de 50 % à 200 %.

5. Procédé selon l'une quelconque des revendications précédentes, dans lequel le rapport entre le volume de chacun des volumes du train de volumes de la pompe à engrenages et ladite quantité reproductible de la composition distribuée est supérieur à 1:50.

6. Procédé de distribution d'une composition déformable gazéifiée dans un espace de forme non uniforme et/ou non enclos, comportant les étapes consistant à :
i) introduire la composition sous pression dans la première extrémité d'un train de volumes formés dans une pompe à engrenages, de préférence présentant des chemins de fuite entre les dents des engrenages, et
ii) mouvoir le train de volumes jusqu'à un point de distribution, dans lequel le point de distribution est combiné avec un mouvement de remplissage, de bas à haut, à profil commandé.
